# EUROPÄISCHE PATENTSCHRIFT

(11) **EP 3 569 989 B1**
(45) Veröffentlichungstag und Bekanntmachung des Hinweises auf die Patenterteilung: **01.03.2023**
(21) Anmeldenummer: 19170992.2
(22) Anmeldetag: 25.04.2019
(51) Int. Cl.: G01F 1/66, G01K 11/22, G01K 17/10

(54) **FLUIDZÄHLER**
FLOWMETER
COMPTEUR DE FLUIDE

(30) Priorität: 05.05.2018 DE 102018003671
(43) Veröffentlichungstag der Anmeldung: 20.11.2019
(73) Patentinhaber: Diehl Metering GmbH, 91522 Ansbach (DE)
(72) Erfinder: Gaugler, Ulrich, 91746 Weidenbach (DE); Buckel, Andreas, 91522 Ansbach (DE)
(74) Vertreter: Diehl Patentabteilung

(56) Entgegenhaltungen:
- EP-A1- 2 000 784
- EP-A1- 2 000 788
- DE-A1- 2 949 346
- DE-A1-102010 011 272
- DE-A1-102015 001 379

## Beschreibung

Die vorliegende Erfindung betrifft einen Fluidzähler, insbesondere einen Wärmemengenzähler zur Erfassung der Kälte- und/oder Wärmemenge eines Fluids, gemäß Anspruch 1 sowie ein Verfahren zum Betrieb eines Fluidzählers, gemäß Anspruch 7.

### Technologischer Hintergrund

Gattungsgemäße Fluidzähler sind Messgeräte zur Bestimmung der Durchflussmenge eines Fluids, wie z. B. Wasserzähler, Gaszähler, Wärmemengenzähler oder dergleichen. Derartige Fluidzähler bzw. Durchflusssensoren werden in der Regel in ein Fluidleitungssystem installiert. Ein gattungsgemäßer Wärmemengenzäher dient dazu, die Energie in Form einer Wärme- oder Kältemenge zu bestimmen, welche z. B. einem Verbraucher über einen Heizkreislauf zugeführt oder über einen Wärmetauscher mit Kühlkreislauf entnommen wird. Die Energie bzw. Wärmeenergie wird dabei aus dem Volumenstrom des Fluids und der Temperaturdifferenz zwischen der Temperatur im Vorlauf (d. h. in Strömungsrichtung des Fluids vor dem Verbraucher) und der Temperatur im Rücklauf (d. h. in Strömungsrichtung des Fluids nach dem Verbraucher) bestimmt.

Der Volumenstrom bzw. die Durchflussmenge wird in der Regel mit einer Messanordnung bestimmt, welche beispielsweise in einem Fluidzählergehäuse untergebracht ist. Die Messanordnung kann mechanisch (mit Flügelrad) oder statisch, z. B. als Ultraschallzähler, ausgestaltet sein. Bei Ultraschallzählern kann die Durchflussmenge beispielsweise nach der Laufzeitdifferenzmethode bestimmt werden, welche den Effekt ausnutzt, dass Schallwellen, die von zumindest einem Ultraschallwandler mit und entgegen der Durchflussrichtung des Fluids gesendet werden, aufgrund des Fluiddurchflusses in und entgegen der Durchflussrichtung des Fluids unterschiedliche Laufzeiten aufweisen. Dadurch lässt sich eine Laufzeitdifferenz ermitteln, anhand der z. B. die mittlere Durchflussgeschwindigkeit des Fluids bestimmt wird, die unter Einbeziehung des Durchströmungsquerschnitts zur Durchflussmengenbestimmung herangezogen wird.

Bei gattungsgemäßen Wärmemengenzählern wird die Temperaturdifferenz zwischen Vorlauf und Rücklauf beispielsweise mittels Temperatursensoren bzw. Temperaturfühlern bestimmt. Der Fluidzähler kann hierbei entweder im Vorlauf oder Rücklauf angeordnet sein. Zur Bestimmung der Temperaturdifferenz dienen in der Regel zwei Temperaturfühler, die jeweils im Vorlauf oder Rücklauf angeordnet sind. Einer der Temperaturfühler (der geräteseitige Temperaturfühler) kann z. B. mit im Fluidzählergehäuse untergebracht sein. Der geräteseitige Temperaturfühler bestimmt dann, je nach Einbauort des Fluidzählers, am Fluidzählergehäuse die Vorlauf- oder Rücklauftemperatur, während der andere Temperaturfühler zur Bestimmung der anderen aus Vorlauf- oder Rücklauftemperatur dient und über ein Kabel am Fluidzähler angeschlossen ist. Der Einbau bzw. die Anordnung der Temperaturfühler sowie des Durchflusssensors ist dabei sehr komplex. Infolgedessen kommt es häufig zu Einbau- und Konfigurationsfehlern, wie z. B. dem Vertauschen der Temperaturfühler oder der falschen Zuordnung bzw. Konfiguration dieser zur Vorlauf- und Rücklauftemperaturbestimmung. Speziell bei Ausführungen, in denen der geräteseitige Temperaturfühler nicht im Fluidzählergehäuse eingebaut ist, kommt es sehr häufig zu Verwechslungen der Temperaturfühler durch das Installationspersonal und somit zu Einbaufehlern. Derartige Einbaufehler verursachen in der Regel einen Fehlbetrieb des Wärmemengenzählers, der nur durch zusätzliche zeit- und kostenintensive Umbaumaßnahmen oder durch eine Neukonfiguration zu beheben ist.

### Druckschriftlicher Stand der Technik

Die DE 10 2015 001 379 A1 beschreibt einen Durchflusszähler zur Erfassung der Wärmemenge eines strömenden Fluids, der in eine das Fluid beinhaltende Versorgungsleitung eingebaut wird. Der Durchflusszähler umfasst eine Messanordnung sowie eine Steuer- und Auswerteeinheit zur Erhebung von Durchflussmengendaten. Anhand der Durchflussmengendaten ermittelt die Steuer- und Auswerteeinheit die einbauabhängige Durchflussrichtung. Der Durchflusszähler weist zudem eine Temperaturmesseinrichtung auf, welche zwei Temperatursensoren umfasst, anhand derer eine Temperaturdifferenz zwischen einer Vorlauftemperatur im Vorlauf und einer Rücklauftemperatur im Rücklauf bestimmt wird. Ferner ist ein dritter Temperatursensor vorgesehen, der sich am oder im Gehäuse des Durchflusszählers befindet und die Temperatur des Durchflusszählers bestimmt. Dabei wird jeweils die Temperaturdifferenz zwischen dem dritten Temperatursensor und den beiden anderen Temperatursensoren gemessen und dadurch der Einbauort des Durchflusszählers gemäß Vor- oder Rücklauf festgestellt. Im Rahmen einer Selbstkonfiguration kann ferner anhand der Temperaturdifferenz zwischen Vorlauftemperatur und Rücklauftemperatur der erste und zweite Temperatursensor jeweils dem Vorlauf oder Rücklauf zugeordnet werden. Aufgrund der Ausgestaltung des Fluidzählers mit einem dritten Temperatursensor können kostenintensive Probleme auftreten, wie z. B. dass es bei größeren Temperaturunterschieden zwischen Fluidtemperatur und Außentemperatur zu Messfehlern des dritten Temperatursensors kommen kann, wenn sich dieser außen am Gehäuse befindet oder dass der komplette Durchflusszähler ausgetauscht werden muss, wenn sich der dritte Temperatursensor im Gehäuse befindet und einen Defekt aufweist.

Die DE 29 49 346 A1 sowie EP 2 000 784 A1 beschreiben jeweils Verfahren zur Wärmeflussmessung, bei denen jeweils die Temperatur aus dem funktionalen Zusammenhang zwischen der Schallgeschwindigkeit und der Temperatur für das betreffende Fluid ermittelt wird und hierdurch eine Temperaturmessung mittels Temperaturfühler vermieden werden kann.

EP 2 000 788 A1 offenbart einen Energierechner mit einer Installationsfehler-Erkennung. Die Installationsfehler-Erkennung erfolgt auf Basis der ermittelten Temperatur des Mediums oder der ermittelten Fließrichtung des Mediums. Ein erkannter Installationsfehler wird auf einem Display angezeigt.

### Aufgabe der vorliegenden Erfindung

Die Aufgabe der vorliegenden Erfindung besteht darin, einen Fluidzähler zur Verfügung zu stellen, bei dem der Installations- und Wartungsaufwand kostengünstig verringert und die Betriebssicherheit verbessert wird.

### Lösung der Aufgabe

Die vorstehende Aufgabe wird durch die gesamte Lehre des Anspruchs 1 sowie des nebengeordneten Anspruchs gelöst. Zweckmäßige Ausgestaltungen der Erfindung sind in den Unteransprüchen beansprucht.

Bei dem erfindungsgemäßen Fluidzähler handelt es sich um einen Wärmemengenzähler zur Erfassung der Kälte- und/oder Wärmemenge eines vorzugsweise strömenden Fluids. Der Fluidzähler ist dabei zur Installation in einem Vorlauf oder einem Rücklauf eines Fluidleitungssystems hergerichtet. Ferner umfasst der Fluidzähler ein Anschlussgehäuse zum Anschluss des Fluidzählers an das Fluidleitungssystem, eine Messanordnung zur Durchflussmengenbestimmung, eine Steuer- und Auswerteeinheit sowie einen ersten und einen zweiten Temperaturfühler. Der erste Temperaturfühler ist zur Installation im Vorlauf und der zweite Temperaturfühler ist zur Installation im Rücklauf vorgesehen, z. B. mittels einer Tauchhülse. Der erste und zweite Temperaturfühler dient entsprechend des jeweiligen Installationsortes (Vorlauf oder Rücklauf) zur Bestimmung der Vorlauftemperatur oder der Rücklauftemperatur. Zudem ist ein Mittel zur Bestimmung der Temperatur des Fluidzählers vorgesehen, wobei eine Temperaturdifferenz zwischen der Temperatur des Fluidzählers und zumindest einer der Temperaturen des ersten und zweiten Temperatursensors ermittelbar ist. Anschließend kann anhand der ermittelten Temperaturdifferenz(en) bestimmt werden, welcher der Temperaturfühler im Vorlauf oder Rücklauf installiert ist, d. h. welcher der Temperaturfühler zur Bestimmung der Vorlauftemperatur und welcher zur Bestimmung der Rücklauftemperatur verwendet bzw. konfiguriert wird. Erfindungsgemäß ist dabei die Messanordnung zur Durchflussmengenbestimmung als Mittel zur Bestimmung der Temperatur des Fluidzählers vorgesehen, d. h. im Wesentlichen zur Bestimmung der Temperatur des Anschlussgehäuses bzw. der Fluidtemperatur im Inneren des Anschlussgehäuses. Daraus resultiert der Vorteil, dass keine zusätzlichen Temperaturfühler bzw. Temperatursensoren zur Bestimmung der Fluidzählertemperatur benötigt werden. Dadurch lassen sich der Installations- sowie Wartungsaufwand in besonderem Maße und kostengünstig verringern, indem z. B. kein zusätzlicher Temperatursensor vorgesehen und entsprechend kalibriert werden muss. Erfindungsgemäß erfolgt die Zuordnung der Temperaturfühler zu Vorlauf oder Rücklauf selbsttätig bzw. automatisch. Dadurch können Einbaufehler, die auf Verwechslungen der Temperaturfühler durch das Installationspersonal zurückzuführen sind, vermieden werden. Dementsprechend werden die Temperaturfühler nach erfolgtem Einbau sowie Temperaturdifferenzbestimmung selbsttätig, z. B. durch die Steuer- und Auswerteeinheit, dem Vorlauf oder Rücklauf zugeordnet, sodass es prinzipiell irrelevant ist, welcher Temperaturfühler im Vorlauf und welcher im Rücklauf installiert wird. Die Einbausicherheit wird dadurch in besonderem Maße noch weiter verbessert.

Es handelt sich bei der Messanordnung um eine Ultraschallmessanordnung mit mindestens einem Ultraschallwandler und einer Ultraschallmessstrecke. Dementsprechend kann die Durchflussmengenbestimmung z. B. anhand einer Laufzeitdifferenzmessung erfolgen.

Vorzugsweise wird der Temperaturfühler, dessen Temperatur eine geringere Temperaturdifferenz zur Temperatur des Fluidzählers aufweist, dem gleichen Installationsort des Fluidzählers, d. h. dem Vorlauf oder dem Rücklauf zugeordnet. Die Zuordnung der Temperaturfühler kann hierbei auch nach dem Ausschlussverfahren anhand der Bestimmung der Temperaturdifferenz zwischen der Temperatur des Fluidzählers und der Temperatur nur eines Temperaturfühlers erfolgen oder auch abwechselnd oder simultan anhand der Bestimmung der Temperaturdifferenz zwischen der Temperatur des Fluidzählers und jeweils der Temperatur beider Temperaturfühler.

In einfacher Weise werden die Temperaturfühler während der Installation im Fluidleitungssystem derart angeordnet, dass entweder die Temperatur des ersten oder des zweiten Temperaturfühlers zumindest im Wesentlichen der Temperatur des Fluidzählers entspricht. Dadurch können Einbaufehler der Temperaturfühler schon bereits während des Einbaus korrigiert werden. Dadurch kann z. B. vermieden werden, dass der am Installationsort des Fluidzählers installierte Temperaturfühler zu weit vom Fluidzähler entfernt installiert wird.

Erfindungsgemäß erfolgt die Bestimmung der Temperatur des Fluidzählers anhand einer temperaturabhängigen Laufzeit einer Ultraschallwelle bzw. eines Ultraschallbursts im Fluid. Vorzugsweise werden hierzu die Ultraschallwellen der Ultraschallwandler der Messanordnung zur Durchflussmengenbestimmung verwendet, deren Laufzeit entlang der Ultraschallmessstrecke temperaturabhängig variieren kann.

Zur Bestimmung der Temperatur des Fluidzählers kann z. B. eine Look-up-Tabelle vorgesehen sein, in welcher Laufzeitgeschwindigkeiten in Abhängigkeit von der entsprechenden Temperatur hinterlegt sind. Anhand der ermittelten Laufzeit des Ultraschallsignals kann somit die entsprechende Temperatur ausgelesen und/oder berechnet werden. Die Look-up-Tabelle kann beispielsweise in einem Speicher des Fluidzählers bzw. der Steuer und Auswerteeinheit hinterlegt sein.

Ferner kann eine Fehlfunktion ermittelt werden, wenn die Temperatur des Temperaturfühlers, der dem Installationsort des Fluidzählers zugeordnet ist, von der Temperatur des Fluidzählers wesentlich abweicht. Beispielsweise wenn der Fluidzähler im Vorlauf angeordnet ist und die Fluidzählertemperatur von der Vorlauftemperatur wesentlich abweicht oder wenn der Fluidzähler im Rücklauf angeordnet ist und die Fluidzählertemperatur von der Rücklauftemperatur wesentlich abweicht. Dadurch kann ein Fehleinbau in einfacher Weise bei der Installation und während des Betriebs ermittelt werden, sodass die Betriebssicherheit erheblich verbessert wird.

Ferner kann eine Fehlerroutine vorgesehen sein, die dazu vorgesehen ist, insbesondere während des Betriebs anhand der ermittelten Temperaturdifferenz(en) eine Plausibilitätsprüfung durchzuführen, um dadurch Fehlfunktionen zu ermitteln. Beispielsweise ist in einem Heizkreislauf während der Heizphase eine im Vergleich zum Vorlauf wesentlich erhöhte Temperatur im Rücklauf, d. h. nach den Verbrauchern, nicht plausibel, sodass ab einem bestimmten Schwellenwert (z. B. Verhältnis Vorlauftemperatur zu Rücklauftemperatur) eine Fehlfunktion detektiert würde. Die Betriebssicherheit wird dadurch noch zusätzlich verbessert. Zweckmäßigerweise kann eine Fehlerausgabe vorgesehen sein, die eine Fehlfunktion optisch und/oder akustisch ausgeben kann. In einfacher Weise kann dadurch ein Fehler bzw. ein Fehleinbau dem Installationspersonal mitgeteilt werden. Beispielsweise kann der Fehler über ein Display, einen Lautsprecher, eine Leuchteinrichtung (Blinker, LED oder dergleichen) ausgegeben oder über eine Mitteilung, welche z. B. per Funk an eine Auslesevorrichtung, ein Smartphone, eine Smart-Home-Steuerung oder die Schaltzentrale des Versorgers übermittelt wird, an den gewünschten Empfänger übertragen werden. Die Übertragung kann beispielsweise auch über Bluetooth, Infrarot, loT (Internet of things)-Anwendungen, NFC (Near Field Communication), Mobilfunk, ISM (Industrial, Scientific and Medical Band), SRD (Short Range Devices), via SMS (Short Message Service), im Zusammenhang mit Big Data-Bearbeitungen oder dergleichen erfolgen.

Bei dem nebengeordnet beanspruchten Verfahren zum Betrieb eines Fluidzählers, nämlich eines Wärmemengenzählers zur Erfassung der Kälteund/oder Wärmemenge eines Fluids, wird der Fluidzähler in der Regel in einem Fluidleitungssystem mit einem Vorlauf und einem Rücklauf betrieben. Zweckmäßigerweise kann der Fluidzähler hierzu entweder im Vorlauf oder Rücklauf des Fluidleitungssystems installiert sein. Der Fluidzähler umfasst ein Anschlussgehäuse, eine Messanordnung zur Durchflussmengenbestimmung, eine Steuerund Auswerteeinheit sowie einen ersten und einen zweiten Temperaturfühler. Der erste und der zweite Temperaturfühler sind dabei zur Bestimmung einer Vorlauf- und einer Rücklauftemperatur vorgesehen. Ferner wird die Temperatur des Fluidzählers bestimmt, wobei eine Temperaturdifferenz zwischen der Temperatur des Fluidzählers und zumindest eine der Temperaturen des ersten und zweiten Temperatursensors ermittelt wird. Die Zuordnung des ersten und zweiten Temperaturfühlers zur Bestimmung der Vorlauftemperatur oder der Rücklauftemperatur erfolgt dabei anhand der Temperaturdifferenz(en). Erfindungsgemäß erfolgt die Bestimmung der Temperatur des Fluidzählers anhand der Messanordnung zur Durchflussmengenbestimmung.

### Beschreibung der Erfindung anhand von Ausführungsbeispielen

Zweckmäßige Ausgestaltungen der vorliegenden Erfindung werden anhand von Zeichnungsfiguren nachstehend näher erläutert. Es zeigen:
- Fig. 1: eine stark vereinfachte schematische Darstellung eines erfindungsgemäßen Wärmemengenzählers innerhalb eines Fluidleitungssystems, sowie
- Fig. 2: eine stark vereinfachte schematische Darstellung einer Ausgestaltung des erfindungsgemäßen Wärmemengenzählers.

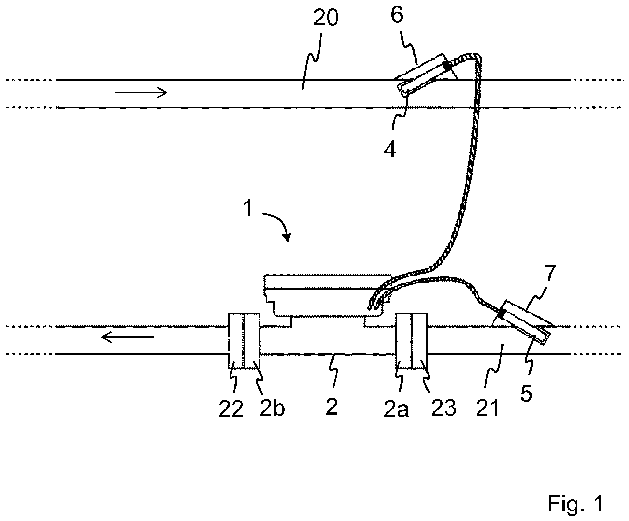

In Fig. 1 ist die prinzipielle Einbausituation eines erfindungsgemäßen Fluidzählers in einem Fluidleitungssystem dargestellt. Der Fluidzähler ist als Wärmemengenzähler 1 ausgestaltet, der zur Erfassung der Kälte- und/oder Wärmemenge des durchströmenden Fluids dient. Das Fluidleitungssystem umfasst hierbei einen Vorlauf 20 und einen Rücklauf 21, wobei zwischen Vorlauf 20 und Rücklauf 21 ein oder mehrere Verbraucher (nicht dargestellt) installiert sein können, die z. B. durch das Fluidleitungssystem mit einer Wärme- und/oder Kältemenge versorgt werden (z. B. Warmwasserversorgung, Kühlungssystem oder dergleichen). Die Durchströmungsrichtung des Fluids ist in den Figuren mit Pfeilen gekennzeichnet.

Der Wärmemengenzähler 1 umfasst ein Anschlussgehäuse 2, mittels dem er in das Fluidleitungssystem installiert werden kann. Hierzu umfasst das Anschlussgehäuse 2 einen Einlass 2a und einen Auslass 2b, die z. B. wie in Fig. 1 dargestellt, jeweils einen Flanschanschluss aufweisen, um an entsprechende Flanschanschlüsse 22, 23 des Fluidleitungssystems angeschlossen zu werden. Alternativ können jedoch auch andere aus dem Stand der Technik bekannte Anschlussvorrichtungen, z. B. Gewindeanschlüsse, vorgesehen sein. Der Wärmemengenzähler 1 kann hierbei wahlweise in den Vorlauf 20 oder, wie in Fig. 1 dargestellt, in den Rücklauf 21 des Fluidleitungssystems installiert sein.

Der Wärmemengenzähler 1 besitzt zudem zwei Temperaturfühler 4, 5, die jeweils im Vorlauf 20 oder Rücklauf 21 des Fluidleitungssystems angeordnet sind. Der Temperaturfühler 4 ist dabei über eine Anschlusseinrichtung 6 im Vorlauf 20 und der Temperaturfühler 5 über eine Anschlusseinrichtung 7 im Rücklauf 21 angeordnet. Als Anschlusseinrichtung 6, 7 kann beispielsweise eine Tauchhülse oder Einschraubhülse verwendet werden, die den Temperfühler 4, 5 in thermischen Kontakt mit dem Fluid bringt, ohne dass der Temperaturfühler 4, 5 mit dem Fluid selbst in Kontakt tritt. Die Tauchhülsen sind vorzugsweise entgegen der Durchflussrichtung des Fluids orientiert. Als Temperaturfühler 4, 5 können sämtliche Arten von aus dem Stand der Technik bekannten Temperatursensoren vorgesehen sein, wie z. B. ein PT-100, Thermoelement oder dergleichen.

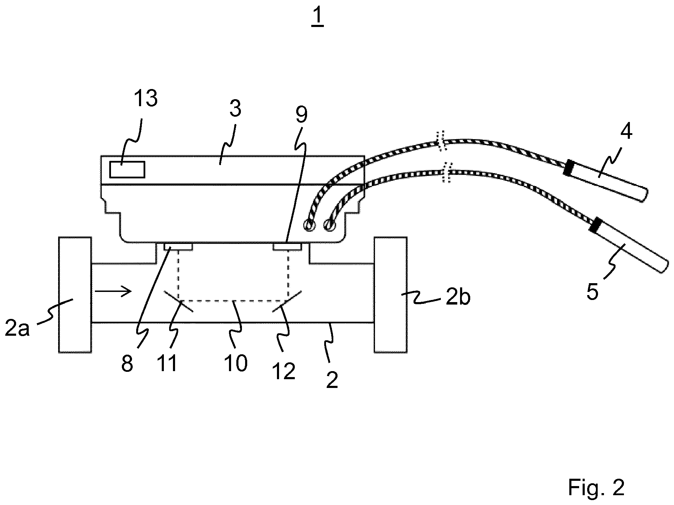

In Fig. 2 ist eine vereinfachte Ausgestaltungsvariante des erfindungsgemäßen Wärmemengenzählers 1 dargestellt. Der Wärmemengenzähler 1 umfasst eine Steuer- und Auswerteeinheit 3 und als Messanordnung zur Durchflussmengenbestimmung eine Ultraschallmessanordnung, die zwei Ultraschallwandler 8, 9 und zwei Umlenkeinrichtungen 11, 12 umfasst. Die von den Ultraschallwandlern 8, 9 erzeugten Ultraschallwellen, sogenannte Ultraschallbursts oder Ultraschallsignale, laufen entlang einer zwischen den Ultraschallwandlern 8, 9 befindlichen Ultraschallmessstrecke 10. Die Umlenkeinrichtungen 11, 12 sind dabei dazu vorgesehen, die Ultraschallwellen derart umzulenken, sodass die Ultraschallmessstrecke 10 U-förmig durch das Anschlussgehäuse 2 verläuft. Ausdrücklich umfasst sind jedoch auch Ausgestaltungsvarianten des erfindungsgemäßen Fluidzählers, bei denen die Ultraschallmessstrecke 10 z. B. gerade oder mehrfach umgelenkt durch das Anschlussgehäuse 2 verläuft.

Ferner wird bei dem Wärmemengenzähler 1 die Temperatur des Wärmemengenzählers 1 bestimmt. Diese Temperatur entspricht im Wesentlichen der Fluidtemperatur am Installationsort (Vorlauf oder Rücklauf) des Wärmemengenzählers 1. Als Mittel zur Bestimmung der Temperatur des Wärmemengenzählers 1 ist die Ultraschallmessanordnung zur Durchflussmengenbestimmung vorgesehen. Hierzu wird eine Temperaturdifferenz zwischen der Temperatur des Wärmemengenzählers 1 und zumindest einer der Temperaturen des ersten und zweiten Temperaturfühlers 4, 5 ermittelt. Anhand der ermittelten Temperaturdifferenz(en) wird anschließend bestimmt, welcher der Temperaturfühler 4, 5 im Vorlauf 20 und welcher im Rücklauf 21 installiert ist, indem der Temperaturfühler 4, 5, dessen Temperatur eine geringere Temperaturdifferenz zur Temperatur des Wärmemengenzählers 1 aufweist, dem Installationsort des Wärmemengenzählers 1, d. h. entsprechend dem Vorlauf 20 oder Rücklauf 21 zugeordnet wird. Diese Zuordnung kann wahlweise bei der Erstinstallation des Wärmemengenzählers 1 und auch während des Betriebs in festlegbaren zeitlichen Abständen durchgeführt werden. Dadurch können Fehlinstallationen und Fehlkonfigurationen auch nachträglich ohne zusätzliche Umbaumaßnahmen korrigiert werden.

Zweckmäßigerweise umfasst der Wärmemengenzähler 1 eine, der Übersichtlichkeit halber nicht dargestellte, Spannungsversorgung. Als Spannungsversorgung kann z. B. eine Batterie, insbesondere eine Lithium-Batterie (z. B. eine A-Zelle oder eine D-Zelle mit einer Lebensdauer von mehr als 10 Jahren), oder ein Netzteil (z. B. 24 V oder 230 V) vorgesehen sein. Ferner kann auch ein nicht dargestelltes Kommunikationsmodul vorgesehen sein, mittels dem der Wärmemengenzähler 1 z. B. über Funk, L-Bus, M-Bus, RS-232, RS-458, LAN oder dergleichen mit einer übergeordneten Einheit, wie z. B. einem Datensammler, kommunizieren kann, um z. B. Betriebs- oder Verbrauchsdaten zu übertragen.

Ausdrücklich vom Offenbarungsgehalt umfasst sind auch mögliche, nicht in den Zeichnungsfiguren dargestellte Kombinationen einzelner Merkmale unterschiedlicher Ausgestaltungsformen.

### BEZUGSZEICHENLISTE

- 1: Wärmemengenzähler
- 2: Anschlussgehäuse
- 2a: Einlass
- 2b: Auslass
- 3: Steuer- und Auswerteeinheit
- 4: erster Temperaturfühler
- 5: zweiter Temperaturfühler
- 6: Anschlusseinrichtung
- 7: Anschlusseinrichtung
- 8: Ultraschallwandler
- 9: Ultraschallwandler
- 10: Ultraschallmessstrecke
- 11: Umlenkeinrichtung
- 12: Umlenkeinrichtung
- 13: Fehlerausgabe

- 20: Vorlauf
- 21: Rücklauf
- 22: Flanschanschluss
- 23: Flanschanschluss

## Patentansprüche

1. Fluidzähler, nämlich Wärmemengenzähler (1) zur Erfassung der Kälte- und/oder Wärmemenge eines Fluids, zur Installation in einem Vorlauf (20) oder Rücklauf (21) eines Fluidleitungssystems, umfassend
ein Anschlussgehäuse (2),
eine Messanordnung zur Durchflussmengenbestimmung, welche mindestens einen Ultraschallwandler (8, 9) und eine Ultraschallmessstrecke (10) umfasst,
eine Steuer- und Auswerteeinheit (3) sowie
einen ersten Temperaturfühler (4), welcher zur Installation im Vorlauf (20) und zur Bestimmung der Temperatur im Vorlauf (20) vorgesehen ist, und einen zweiten Temperaturfühler (5), welcher zur Installation im Rücklauf (21) und zur Bestimmung der Temperatur im Rücklauf (21) vorgesehen ist,
wobei ein Mittel zur Bestimmung der Temperatur des Fluidzählers vorgesehen ist,
wobei eine Temperaturdifferenz zwischen der Temperatur des Fluidzählers und zumindest einer der Temperaturen des ersten (4) und zweiten Temperaturfühlers (5) ermittelbar ist, **dadurch gekennzeichnet, dass**
die Steuer- und Auswerteeinheit (3) anhand der ermittelten Temperaturdifferenz zwischen der Temperatur des Fluidzählers und zumindest einer der Temperaturen des ersten und zweiten Temperaturfühlers (4, 5) bestimmt, welcher der Temperaturfühler (4, 5) im Vorlauf (20) oder Rücklauf (21) installiert ist,
wobei die Messanordnung zur Durchflussmengenbestimmung als Mittel zur Bestimmung der Temperatur des Fluidzählers vorgesehen ist, wobei die Bestimmung der Temperatur des Fluidzählers anhand einer temperaturabhängigen Laufzeit eines Ultraschallsignals im Fluid erfolgt, und
wobei eine Zuordnung der Temperaturfühler (4, 5) zu Vorlauf (20) oder Rücklauf (21) selbsttätig erfolgt.

2. Fluidzähler nach Anspruch 1,
**dadurch gekennzeichnet, dass** der Temperaturfühler (4, 5), dessen Temperatur eine geringere Temperaturdifferenz zur Temperatur des Fluidzählers aufweist, dem Installationsort des Fluidzählers zugeordnet wird.

3. Fluidzähler nach Anspruch 1, **dadurch gekennzeichnet, dass** eine Look-up-Tabelle vorgesehen ist, in welcher die Laufzeitgeschwindigkeiten des Ultraschallsignals im Fluid in Abhängigkeit von der entsprechenden Temperatur des Fluids und/oder des Fluidzählers hinterlegt sind und die zu bestimmende Temperatur des Fluidzählers anhand der Laufzeit des Ultraschallsignals und der Look-up-Tabelle ableitbar ist.

4. Fluidzähler nach mindestens einem der vorhergehenden Ansprüche, **dadurch gekennzeichnet, dass** eine Fehlfunktion ermittelt wird, wenn die Temperatur des Temperaturfühlers (4, 5), der dem Installationsort des Fluidzählers zugeordnet ist, von der Temperatur des Fluidzählers wesentlich abweicht.

5. Fluidzähler nach mindestens einem der vorhergehenden Ansprüche, **dadurch gekennzeichnet, dass** eine Fehlerroutine, insbesondere während des Betriebs, vorgesehen ist, wobei eine Plausibilitätsprüfung anhand der ermittelten Temperaturdifferenz(en) durchgeführt wird, die zur Bestimmung von Fehlfunktionen herangezogen wird.

6. Fluidzähler nach mindestens einem der vorhergehenden Ansprüche, **dadurch gekennzeichnet, dass** eine Fehlerausgabe (13) vorgesehen ist, die dazu hergerichtet ist, Fehlfunktionen insbesondere optisch und/oder akustisch auszugeben.

7. Verfahren zum Betrieb eines Fluidzählers nach einem der Ansprüche 1 bis 6,
wobei die Temperatur des Fluidzählers bestimmt wird, und
eine Temperaturdifferenz zwischen der Temperatur des Fluidzählers und zumindest einer der Temperaturen des ersten und zweiten Temperatursensors ermittelt wird,
wobei eine Zuordnung des ersten und zweiten Temperaturfühlers zur Bestimmung der Vorlauftemperatur oder der Rücklauftemperatur anhand der Temperaturdifferenz zwischen der Temperatur des Fluidzählers und zumindest einer der Temperaturen des ersten und zweiten Temperaturfühlers (4, 5) erfolgt,
wobei die Bestimmung der Temperatur des Fluidzählers anhand der Messanordnung zur Durchflussmengenbestimmung erfolgt, wobei die Bestimmung der Temperatur des Fluidzählers anhand einer temperaturabhängigen Laufzeit eines Ultraschallsignals im Fluid erfolgt, und
wobei eine Zuordnung der Temperaturfühler (4, 5) zu Vorlauf (20) oder Rücklauf (21) selbsttätig erfolgt.

## Claims

1. Fluid meter, specifically heat meter (1) for recording the quantity of cooling energy and/or heat of a fluid, for installation in a feed (20) or return (21) of a fluid line system, comprising
a connection housing (2),
a measuring arrangement for flow rate determination that comprises at least one ultrasound transducer (8, 9) and an ultrasound measurement path (10),
a control and evaluation unit (3) and
a first temperature sensor (4), which is intended for installation in the feed (20) and is intended to determine the temperature in the feed (2), and a second temperature sensor (5), which is intended for installation in the return (21) and is intended to determine the temperature in the return (21),
wherein a means for determining the temperature of the fluid meter is provided,
wherein a temperature difference between the temperature of the fluid meter and at least one of the temperatures of the first (4) and second (5) temperature sensor can be determined, **characterized in that**
with the aid of the temperature difference determined between the temperature of the fluid meter and at least one of the temperatures of the first and second temperature sensor (4, 5), the control and evaluation unit (3) determines which of the temperature sensors (4, 5) is installed in the feed (20) or return (21),
wherein the measuring arrangement for flow rate determination is provided as a means for determining the temperature of the fluid meter, wherein the determination of the temperature of the fluid meter is carried out with the aid of a temperature-dependent time of flight of an ultrasound signal in the fluid, and
wherein an assignment of the temperature sensors (4, 5) to the feed (20) or return (21) is carried out automatically.

2. Fluid meter according to Claim 1, **characterized in that** the temperature sensor (4, 5) whose temperature has a lower temperature difference from the temperature of the fluid meter is assigned to the installation position of the fluid meter.

3. Fluid meter according to Claim 1, **characterized in that** a look-up table is provided, in which the time-offlight speeds of the ultrasound signal in the fluid are stored as a function of the corresponding temperature of the fluid and/or of the fluid meter, and the temperature to be determined of the fluid meter can be derived with the aid of the time of flight of the ultrasound signal and the look-up table.

4. Fluid meter according to at least one of the preceding claims, **characterized in that** a malfunction is determined when the temperature of the temperature sensor (4, 5) which is assigned to the installation position of the fluid meter deviates substantially from the temperature of the fluid meter.

5. Fluid meter according to at least one of the preceding claims, **characterized in that** an error routine is provided, in particular during operation, a plausibility check being carried out with the aid of the temperature difference(s) determined, which is used to determine malfunctions.

6. Fluid meter according to at least one of the preceding claims, **characterized in that** an error output (13) is provided, which is configured to output malfunctions, in particular optically and/or acoustically.

7. Method for operating a fluid meter according to one of Claims 1 to 6, wherein
the temperature of the fluid meter is determined, and
a temperature difference between the temperature of the fluid meter and at least one of the temperatures of the first and second temperature sensor is determined, wherein
an assignment of the first and second temperature sensor for determining the feed temperature or the return temperature is carried out with the aid of the temperature difference between the temperature of the fluid meter and at least one of the temperatures of the first and second temperature sensor (4, 5),
wherein the determination of the temperature of the fluid meter is carried out with the aid of the measuring arrangement for flow rate determination, wherein the determination of the temperature of the fluid meter is carried out with the aid of a temperature-dependent time of flight of an ultrasound signal in the fluid, and
wherein an assignment of the temperature sensors (4, 5) to the feed (20) or return (21) is carried out automatically.

## Revendications

1. Compteur de fluide, notamment compteur de chaleur (1), pour détecter la quantité de froid et/ou de chaleur d'un fluide, destiné à être installé dans une canalisation aller (20) ou une canalisation retour (21) d'un système de canalisation de fluide, comprenant
un boîtier de raccordement (2),
un agencement de mesure pour la détermination de débit qui comprend au moins un transducteur à ultrasons (8, 9) et une section de mesure à ultrasons (10),
une unité de commande et de traitement (3), et
une première sonde de température (4) qui est prévue pour être installée dans la canalisation aller (20) et pour déterminer la température dans la canalisation aller (20), et une deuxième sonde de température (5) qui est prévue pour être installée dans la canalisation retour (21) et pour déterminer la température dans la canalisation retour (21),
dans lequel un moyen pour déterminer la température du compteur de fluide est prévu,
dans lequel une différence de température entre la température du compteur de fluide et au moins l'une des températures de la première sonde de température (4) et de la deuxième sonde de température (5) peut être établie,
**caractérisé en ce que** l'unité de commande et de traitement (3) détermine à l'aide de la différence de température établie entre la température du compteur de fluide et au moins l'une des températures de la première et de la deuxième sonde de température (4, 5) laquelle des sondes de température (4, 5) est installée dans la canalisation aller (20) ou dans la canalisation retour (21),
dans lequel l'agencement de mesure pour la détermination de débit est prévu comme un moyen de détermination de la température du compteur de fluide, la détermination de la température du compteur de fluide étant effectuée à l'aide d'un temps de propagation, dépendant de la température, d'un signal ultrasonore dans le fluide, et
dans lequel une attribution de la sonde de température (4, 5) à la canalisation aller (20) ou à la canalisation retour (21) est effectuée de manière autonome.

2. Compteur de fluide selon la revendication 1, **caractérisé en ce que** la sonde de température (4, 5) dont la température présente une différence de température inférieure à la température du compteur de fluide est attribuée au site d'installation du compteur de fluide.

3. Compteur de fluide selon la revendication 1, **caractérisé en ce qu'**une table de consultation est prévue dans laquelle les vitesses de temps de propagation du signal ultrasonore dans le fluide sont mémorisées en fonction de la température correspondante du fluide et/ou du compteur de fluide, et la température à déterminer du compteur de fluide peut être déduite à l'aide du temps de propagation du signal ultrasonore et de la table de consultation.

4. Compteur de fluide selon au moins l'une des revendications précédentes, **caractérisé en ce qu'**un dysfonctionnement est établi si la température de la sonde de température (4, 5) qui est attribuée au site d'installation du compteur de fluide dévie substantiellement de la température du compteur de fluide.

5. Compteur de fluide selon au moins l'une des revendications précédentes, **caractérisé en ce qu'**une routine de gestion d'erreur est prévue, en particulier en cours de fonctionnement, dans lequel un contrôle de plausibilité est effectué à l'aide de la ou des différences de température établies et est utilisé pour déterminer des dysfonctionnements.

6. Compteur de fluide selon au moins l'une des revendications précédentes, **caractérisé en ce qu'**une sortie d'erreur (13) est prévue qui est conçue pour sortir des dysfonctionnements, en particulier de manière optique et/ou acoustique.

7. Procédé d'exploitation d'un compteur de fluide selon l'une quelconque des revendications 1 à 6, dans lequel
la température du compteur de fluide est déterminée, et
une différence de température entre la température du compteur de fluide et au moins l'une des températures du premier et du deuxième capteur de température est établie,
dans lequel une attribution de la première et de la deuxième sonde de température pour déterminer la température de canalisation aller ou la température de canalisation retour à l'aide de la différence de température entre la température du compteur de fluide et au moins l'une des températures de la première et de la deuxième sonde de température (4, 5) est effectuée,
dans lequel la détermination de la température du compteur de fluide est effectuée à l'aide de l'agencement de mesure pour la détermination de débit, dans lequel la détermination de la température du compteur de fluide est effectuée à l'aide d'un temps de propagation, dépendant de la température, d'un signal ultrasonore dans le fluide, et
dans lequel une attribution de la sonde de température (4, 5) à la canalisation aller (20) ou à la canalisation retour (21) est effectuée de manière autonome.
